# EUROPEAN PATENT SPECIFICATION

(11) **EP 1 636 552 B1**
(45) Date of publication and mention of the grant of the patent: **03.08.2011**
(21) Application number: 03741066.9
(22) Date of filing: 24.06.2003
(51) Int. Cl.: G01F 11/28

(54) **DISPENSING CONTAINER**
ABGABEBEHÄLTER
RECIPIENT DE DISTRIBUTION

(43) Date of publication of application: 22.03.2006
(73) Proprietor: Sutter Industries S.p.A., 15060 Borghetto Borbero AL (IT)
(72) Inventor: SUTTER, Aldo, I-15060 Borghetto Borbera AL (IT)
(74) Representative: Papa, Elisabetta
(86) International application number: PCT/IT2003/000392
(87) International publication number: WO 2004/113850

(56) References cited:
- DE-U- 8 625 869
- US-A- 2 714 975
- US-A- 4 418 843
- US-A- 4 640 441
- US-A- 4 646 948
- US-B1- 6 290 102

## Description

The present invention relates to a dispensing container, and in particular to a container of the type comprising a main bottle receiving a fluid product to be dispensed and a metering receptacle connected to the main bottle by a duct, in which the main bottle is apt to be deformed to cause the inflow of the fluid product through the duct and into the metering receptacle.

Several types of the hereto-introduced container are known. In particular, EP 0 010 965 to Bettix Limited discloses a deformable container, in which a main bottle for a liquid and a metering receptacle are arranged side-by-side and are mutually connected by a duct having a sinuous course. By pressing onto the walls of the main bottle, the user makes the liquid inflow from such bottle into the duct, and from the latter into the metering receptacle. Then the liquid is dispensed outwardly through a top opening of the metering receptacle.

US 4,640,441 discloses a container having a reservoir chamber and a dosage chamber connected by a duct. Duct opens into dosage chamber through two inlets located one above the other. The reservoir chamber can be squeezed to deliver the fluid contained therein into the dosage chamber through the duct and its inlets. The fluid is then delivered outside the container through a discharge conduit. One of the inlets is located at a top wall of the dosage chamber, has an irregular shape and is arranged so that the flow path enters the dosage chamber inclined downwardly. The present invention stems from the observation that the known-art container just described entails the drawback that the liquid coming from the main bottle is violently expressed into the metering receptacle and tends to directly outpour through the top opening of the latter. This is due to the fact that the main bottle has to be pressed vehemently in order to make the liquid inflow from the bottle itself into the metering receptacle, and from the fact that the cap usually closing the top opening of the metering receptacle has to be removed or at least loosened in order to allow the outlet of air required for liquid inlet.

Hence, the known-art containers described hereto can be cumbersome and less than practical to use. Moreover, they can cause an undesired waste of the product contained therein. Furthermore - and above all - such known-art containers cause a difficult metering of the product.

Hence, the technical problem underlying the present invention is that of providing a dispensing container allowing to overcome the drawbacks mentioned above with reference to the known art.

Such a problem is solved by a container according to claim 1.

Preferred features of the present invention reside in the dependant claims thereof. The present invention provides some relevant advantages. The main advantage lies in the fact that the specific shape of the duct lumen near the inlet port of the fluid into the metering receptacle reduces the fluid outflow rate, fostering an even outflow of the fluid into the metering receptacle and thereby avoiding outpours outside of the container. This also prevents squirting from the container and facilitates the metering steps.

Hence, the container of the invention is convenient and practical to use. Moreover, it avoids any waste of the fluid product contained therein.

Other advantages, features and the operation steps of the present invention will be made apparent in the following detailed description of some embodiments thereof, given by way of examples and not for limitative purposes. It will be made reference to the figures of the annexed drawings, wherein:
Figure 1 shows a perspective view of an embodiment of the container according to the present invention;
Figure 2 shows a front view of the container of Figure 1;
Figure 3 shows a side view of the container of Figure 1;
Figure 4A shows a sectional view of an enlarged detail of a first embodiment of the container of Figure 2, taken along a plane parallel to that of the latter Figure;
Figure 5A shows a sectional view of an enlarged detail of the container of Figure 4A, taken along line B-B of the latter Figure;

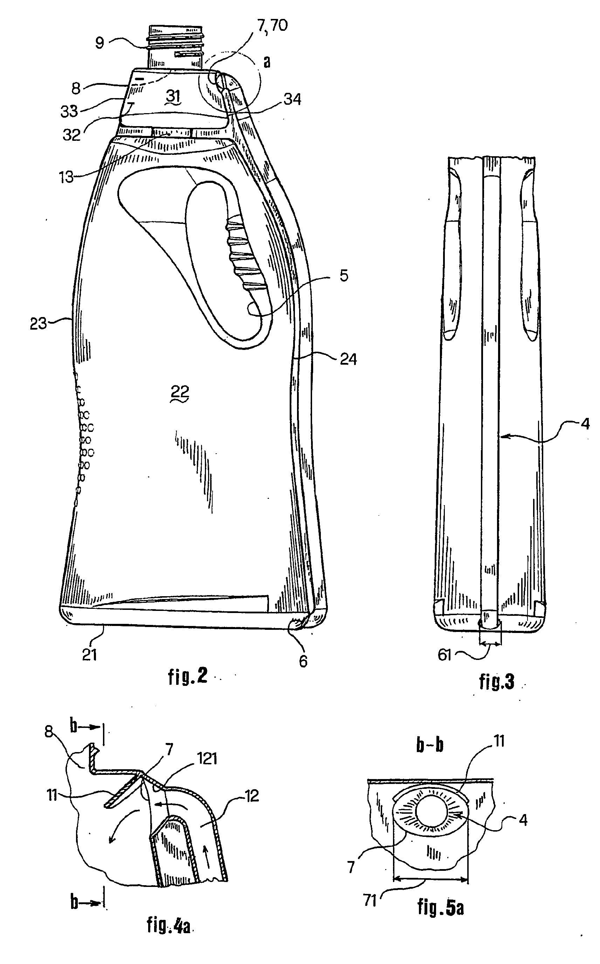

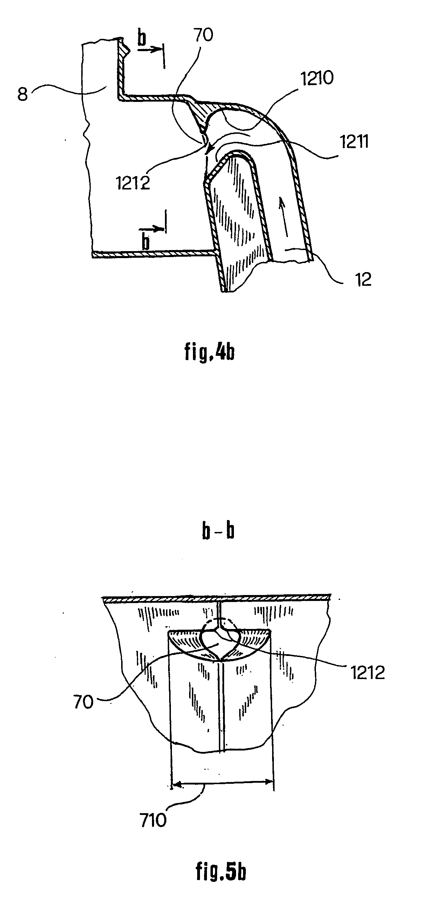

Figure 4B shows a sectional view of an enlarged detail of a second embodiment of the container of Figure 2, taken along a plane parallel to that of the latter Figure; and
Figure 5B shows a sectional view of an enlarged detail of the container of Figure 4B, taken along line B-B of the latter Figure.

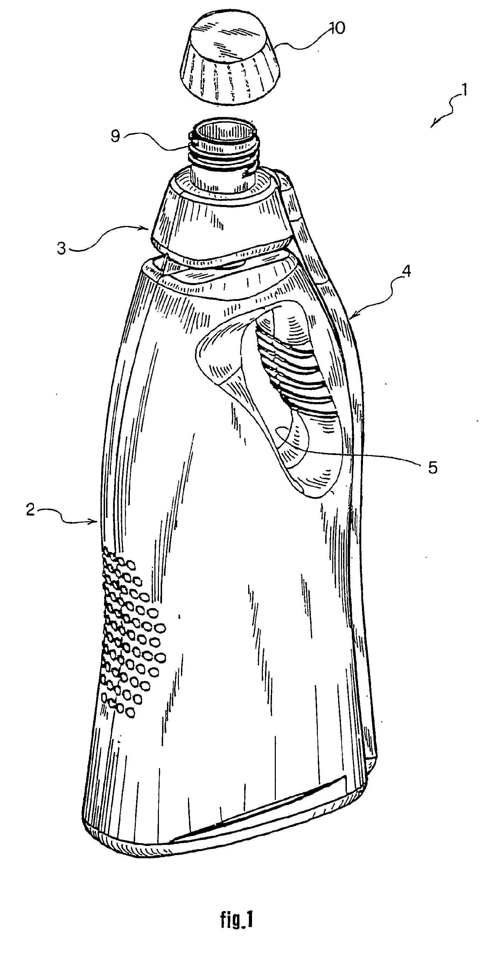

Referring initially to Figure 1, a dispensing container according to the present invention is generally indicated by 1.

In the present embodiment, the container 1 is meant to contain a fluid product for house-cleaning.

The container 1 mainly comprises: a main bottle 2 for a fluid, apt to receive the fluid product to be dispensed; a metering receptacle 3, located above the main bottle 2 and apt to allow a metered outwardly dispensing of the product; and a duct 4, communicating the bottle 2 with the metering receptacle 3. Each of such components will be described in greater detail in the following, with reference to two specific embodiments of the invention.

As best seen in Figure 2, the main bottle 2 has a base, or bottom, 21 and a sidewall 22, the latter shaped so as to have sides 23 and 24 having a sinuous contour. Along the side 24 of the container 2 there extends also the duct 4, which therefore develops according to the same sinuous contour.

In the present embodiment, the main bottle 2 has a cross section of elongated shape.

Within the main bottle 2 a gripping seat 5 is obtained, just for allowing a user's gripping the container 1.

The bottle 2 has an outlet port, denoted by 6, for the fluid product, located at the side 24 of the bottle 2 itself and near or adjacent to the bottom 21, substantially at the same level of the latter.

As best seen in Figure 3, the outlet port 6 has a substantially elongated shape, with a greater transverse dimension 61 thereof located substantially parallel to the bottom 21 of the main bottle 2. In the present embodiment such an outlet port 6 is substantially oval or elliptical.

Further referring to Figure 2, the metering receptacle 3 has a capacity substantially lower with respect to the main bottle 2, and it is meant, as mentioned above, to meter the fluid product contained in the container 1. For this purpose, the metering receptacle 3 bears, at a sidewall 31 thereof, graduation marks 32 apt to allow an accurate metering.

The metering receptacle 3 is located substantially longitudinally aligned to the main bottle 2, and it also has a cross section of elongated shape and tilted sides, the latter indicated by 33 and 34, respectively, corresponding to the sides 23 and 24 of the main bottle 2. The duct 4 also extends along the side 34 of the metering receptacle 3, partly following its contour.

The metering receptacle 3 is connected to the main bottle 2 by a vertical channel 13 substantially centered with respect to the longitudinal axis of the container 1. This vertical channel 13 is used by the manufacturer solely to fill the container 1, and in particular the main bottle 2 thereof. Upon attaining the initial filling of the bottle 2, the channel 13 is sealed by the same manufacturer with a cap, so as not to be subsequently re-openable by the end user.

The metering receptacle 3 further comprises a top opening 8 for outwardly dispensing the fluid product. In particular, such opening 8 of the metering receptacle 3 opens on a neck 9 of the container 1 having an external thread apt to allow the closure thereof by a cap 10, the latter being shown by way of example in Figure 1. As it is shown, e.g., in Figures 4A and 4B, the duct 4 has an internal lumen 12 connecting the outlet port 6 of the main bottle 2 to an inlet port 7 or 70 of the metering receptacle 3, so as to allow the transit of the fluid to be dispensed from the former to the latter.

At the portion of the duct 4 ending into the metering receptacle 3, the container 1 is susceptible of various alternative embodiments.

A first embodiment is shown in Figures 4A and 5A. Referring to these latter figures, as already mentioned above the metering receptacle 3 comprises a port for inletting the fluid product thereinto, in this case denoted by 7. This inlet port 7 is located at a top portion of the vessel 3, and in particular at the tilted side 34 thereof, hence substantially at the same side of the outlet port 6 of the bottle 2. The overall arrangement is such that, by virtue of the tilting of the side 34, the inlet port 7 substantially faces the bottom 21 of the container 1.

As it is shown in greater detail in Figure 5A, also the inlet port 7 has a substantially elongated shape and it is located with a greater transverse dimension 71 thereof substantially parallel to the bottom 21 of the main bottle 2. In particular, in the present embodiment such inlet port 7 is substantially elliptical or oval.

As it is shown always in Figures 4A and 5A, in the present embodiment the metering receptacle 3 internally has a deviation member 11, extending thereinto from the internal face of the sidewall 31. As it will be detailed later on, the deviation member 11 is apt to deviate the flow of product crossing the port 7 toward the bottom of the metering receptacle 3, i.e. toward the bottom 21 of the container 1, so as to prevent a product outpouring from the top opening 8.

More precisely, the deviation member 11 is located at the inlet port 7, and in particular thereabove. In the present embodiment, the deviation member 11 is in form of a flap and it also implements a squirt guard member.

At the inlet port 7 of the metering receptacle 3, the lumen 12 comprises an end portion 121 having a cross section increasing toward the inlet port 7 itself.

In the present embodiment, such an end portion 121 has a substantially frustum-of-cone -shaped development. The cross section of the portion 121 matches that of the inlet port 7, hence having an analogous substantially elongated shape, and in particular elliptical or oval, and an analogous arrangement with a greater cross dimension substantially parallel to the bottom 21 of the container 1.

Of course, even near the outlet port 6 of the bottle 2 the internal lumen 12 of the duct 4 has a portion having a cross section of shape and arrangement analogous to those of the outlet port 6 itself.

A second embodiment of the container 1, and especially of the end portion of the duct 4 ending into the metering receptacle 3, will hereinafter be described with reference to Figures 4B and 5B and in connection to the sole aspects differentiating such second embodiment from the first one.

In such second embodiment, the metering receptacle 3 comprises an inlet port, in this case indicated by 70, located also in this case at the tilted side 34 of the receptacle 3 itself. Hence, in this case as well, the overall arrangement is such that by virtue of the tilting of the side 34 the inlet port 70 substantially faces the bottom 21 of the container 1.

As it is shown in greater detail in Figure 5B, also the inlet port 70 has a substantially elongated shape and is located with a greater transverse dimension 710 thereof substantially parallel to the bottom 21 of the main bottle 2. In particular, in the present embodiment this inlet port 70 is substantially half-ellipse- or half-moon-shaped.

As it is shown always in Figures 4B and 5B, the lumen 12 comprises, at the inlet port 70 of the metering receptacle 3, an end portion, in this case indicated by 1210, having a substantially descending development tilted toward the bottom 21 of the container 1, therefore extending substantially bottomwise.

The cross section of the portion 1210 matches that of the inlet port 70, hence having an analogous substantially half-ellipse or half-moon shape, and an analogous arrangement with a greater transverse dimension substantially parallel to the bottom 21 of the container 1.

The end portion 1210 has a cross section increasing toward the inlet port 70. In particular, in the present embodiment the end portion 1210 has, at a bottom wall 1211 thereof, a substantially frustum-of-cone -shaped development having an elliptical base, so as to implement the abovementioned half-ellipse or half-moon shape of the cross section.

The wall of the side 34 arranged above the inlet port 70 has an appendix 1212 extending substantially at the top mouthpiece of the port 70 itself. This appendix 1212 has a substantially vertical development and serves as a flow deviation member, analogously to the flap 11 of the preceding embodiment. In particular, the appendix 1212 deviates the flow of product downwards, i.e. toward the bottom of the metering receptacle 3 (and therefore toward the bottom 21 of the container 1).

Returning now to the general description of the container 1, in the present embodiment the lumen 12 has a substantially circular cross section along the entire length of the duct 4, said section assuming an elongated section merely in the end parts at the outlet port 6 and inlet port 7, 70.

The container 1, and in particular the main bottle 2 thereof, is made of a material having an elastic deformability such as to allow the container 2 to be deformed to cause the fluid product to inflow through the duct 4 and into the metering receptacle 3. Moreover, the container 1 may be piece-formed by a blow-molding method.

The operation modes of the container 1 will be illustrated hereinafter with reference to the hereto-introduced figures.

When a user wishes to dispense the fluid product contained in the container 1, he/she squeezes the sidewall 22 of the main bottle 2. Such a squeezing reduces the internal volume of the latter and expresses the product through the duct 4 and therefrom into the metering receptacle 3.

It will be appreciated that, as mentioned above, the specific shape having an increasing cross section of the end portion 121 or 1210 of the lumen 12 fosters an even outletting of the product, preventing outpourings of the latter from the container 1 and reducing or eliminating squirting. In particular, the hereto-described specific shape and arrangement of the lumen 12, in particular in the second embodiment illustrated with reference to Figures 4B and 5B, causes a fan-shaped inflow of the product into the metering receptacle 3.

Moreover, the presence of the deviation member 11 or 1212 prevents, under any circumstance, that the product, turbulently flowing out from the duct 4 into the metering receptacle 3, directly outpours from the container 1 through the top opening 8. In fact, this member 11 or 1212 works as a barrier for the fluid product, deviating the latter downwards and letting it flow toward the bottom of the metering receptacle.

In the second embodiment illustrated above, this latter advantage is obtained also by virtue of the descending course of the end portion 1210 of the lumen 12. In fact, such a course, jointly to the fact that the inlet port 7, 70 substantially faces the bottom 21 of the container 1, allows the flow of product to have a substantially downwardly oriented direction of inlet into the metering receptacle 3.

Besides, these advantages are important since a user is hardly capable of accurately gauging the force required to make the product evenly inflow from the bottle 2 into the metering receptacle 3 - also since such force should vary according to the amount of fluid remaining into the bottle 2 itself as well - entailing that often the fluid product receives a thrust markedly greater than the required one. Moreover, the elongated shape and the specific arrangement of the cross section of the outlet port 6 and of the lumen portion 12 near such port 6 allows the product to be dispensable down to the total emptying of the bottle 2, preventing unused product from remaining onto the bottom 21 of the container 1.

Upon transferring the fluid product from the bottle 2 to the metering receptacle 3, the user may dispense it in the desired dose, also with the aid of the gradation marks 32.

It will be understood that the present invention is susceptible of several forms and embodiments alternative to the hereto-described ones, above all concerning the inlet of the metering receptacle and the duct portion adjacent thereto.

For example, the end portion of the duct internal lumen arranged near to the inlet port of the metering receptacle may have a substantially frustum-of-pyramid development instead of a frustum-of-cone one.

The present invention has been hereto described with reference to preferred embodiments thereof. It is understood that other embodiments might exist, all falling within the concept of the same invention, and all comprised within the protective scope of the claims hereinafter.

## Claims

1. A dispensing container (1), comprising:
- a main bottle (2), apt to receive the fluid product to be dispensed and having an outlet port (6) for the fluid product itself;
- a metering receptacle (3), having a port (7; 70) for the inlet of the fluid product thereinto, which inlet port (7; 70) is located at a sidewall thereof, and an opening (8) for outwardly dispensing the fluid product; and
- a duct (4), having an internal lumen (12) connecting said outlet port (6) of said main bottle (2) to said inlet port (7; 70) of said metering receptacle (3),
wherein said main bottle (2) is of the type apt to be deformed for causing the inflow of the fluid product into said metering receptacle (3) through said duct (4),
**characterized**
**in that** said internal lumen (12) of said duct (4) comprises, at said inlet port (7; 70) of said metering receptacle (3), an end portion (121; 1210) having a cross section increasing toward said inlet port (7; 70),
and **in that** said end portion (121; 1210) of said internal lumen (12) and said inlet port (7; 70) of said metering receptacle (3) have a cross section of substantially elongated shape and are arranged so that a greater transverse dimension (71; 710) thereof be substantially parallel to the bottom (21) of the container itself.

2. The container (1) according to claim 1, wherein said end portion (121; 1210) of said internal lumen (12) has at least partly a substantially frustum-of-cone or frustum-of-pyramid -shaped development.

3. The container (1) according to claim 1 or 2, wherein said end portion (121) of said internal lumen (12) and said inlet port (7) of said metering receptacle (3) have a cross section of substantially elliptical shape.

4. The container (1) according to claim 1 or 2, wherein said end portion (121) of said internal lumen (12) and said inlet port (7) of said metering receptacle (3) have a cross section of substantially oval shape.

5. The container (1) according to claim 1 or 2, wherein said end portion (1210) of said internal lumen (12) and said inlet port (70) of said metering receptacle (3) have a cross section of substantially half-ellipse or half-moon shape.

6. The container (1) according to any one of the preceding claims, wherein said end portion (121) of said internal lumen (12) extends substantially parallel to the bottom (21) of the container itself.

7. The container (1) according to any one of the claims 1 to 5, wherein said end portion (1210) of said internal lumen (120) has a descending development substantially tilted toward the bottom (21) of the container itself.

8. The container (1) according to any one of the preceding claims, wherein said duct (4) extends along a side (24, 34) of the container itself.

9. The container (1) according to any one of the preceding claims, wherein said metering receptacle (3) is located above said main bottle (2).

10. The container (1) according to any one of the preceding claims, wherein said metering receptacle (3) is located substantially longitudinally aligned with said main bottle (2).

11. The container (1) according to any one of the preceding claims, wherein said inlet port (7; 70) of said metering receptacle (3) is located at a wall (34) of said metering receptacle (3) having a tilt such that said inlet port (7; 70) faces the bottom (21) of the container itself.

12. The container (1) according to any one of the preceding claims, wherein said inlet port (7; 70) of said metering receptacle (3) is located at a top portion thereof.

13. The container (1) according to any one of the preceding claims, wherein said metering receptacle (3) comprises a deviation member (11; 1212) apt to deviate the flow of product coming from said duct (4) toward the bottom of said metering receptacle (3).

14. The container (1) according to the preceding claim, wherein said deviation member (11; 1212) is located at said inlet port (7; 70) of said metering receptacle (3).

15. The container (1) according to the preceding claim, wherein said deviation member (11; 1212) is located above said inlet port (7; 70) of said metering receptacle (3).

16. The container (1) according to any one of the claims 13 to 15, wherein said deviation member (11; 1212) is apt to serve as squirt guard.

17. The container (1) according to any one of the claims 13 to 16, wherein said deviation member (11; 1212) comprises a flap extending internally to said metering receptacle (3).

18. The container (1) according to any one of the claims 13 to 17, wherein said deviation member comprises a member (1212) extending at the top mouthpiece of said inlet port (70).

19. The container (1) according to the preceding claim, wherein said member (1212) extending at the top mouthpiece of said inlet port (70) is obtained as an appendix of a wall of said metering receptacle (3).

20. The container (1) according to any one of the preceding claims, wherein said opening (8) of said metering receptacle (3) is located at a top wall of the metering receptacle (3) itself.

21. The container (1) according to any one of the preceding claims, wherein said outlet port (6) of said main bottle (2) is located at the bottom (21) of the main bottle itself.

22. The container (1) according to any one of the preceding claims, wherein said outlet port (6) of said main bottle (2) has a substantially elongated shape.

23. The container (1) according to the preceding claim, wherein said outlet port (6) of said main bottle (2) is located with a greater transverse dimension (61) thereof substantially parallel to the bottom (21) of the main bottle (2) itself.

24. The container (1) according to claim 22 or 23, wherein said outlet port (6) is substantially elliptic.

25. The container (1) according to claim 22 or 23, wherein said outlet port (6) is substantially oval.

26. The container (1) according to any one of the preceding claims, having a gripping seat (5) of the container itself obtained in said main bottle (2).

## Patentansprüche

1. Abgabebehälter (1), mit:
- einer Hauptflasche (2), die zum Aufnehmen des Fluidprodukts, welches abzugeben ist, geeignet ist und eine Auslassöffnung (6) für das Fluidprodukt selbst aufweist;
- einem Dosiergefäß (3), das eine Öffnung (7; 70) für das Einlassen des Fluidprodukts in dasselbe aufweist, wobei die Einlassöffnung (7; 70) an einer Seitenwand desselben angeordnet ist, und eine Öffnung (8) zum Abgeben des Fluidprodukts nach außen; und
- einem Kanal (4), der einen inneren Hohlraum (12) hat, welcher die Auslassöffnung (6) der Hauptflasche (2) mit der Einlassöffnung (7; 70) des Dosiergefäßes (3) verbindet,
wobei die Hauptflasche (2) dafür ausgebildet ist, verformt zu werden, um das Einströmen des Fluidprodukts in das Dosiergefäß (3) durch den Kanal (4) zu bewirken,
**dadurch gekennzeichnet,**
**dass** der innere Hohlraum (12) des Kanals (4) an der Einlassöffnung (7; 70) des Dosiergefäßes (3) einen Endteil (121; 1210) aufweist, welcher einen Querschnitt hat, der in Richtung der Einlassöffnung (7; 70) zunimmt, und
**dass** der Endteil (121; 1210) des inneren Hohlraums (12) und die Einlassöffnung (7; 70) des Dosiergefäßes (3) einen Querschnitt von im Wesentlichen langgestreckter Form besitzen und derart angeordnet sind, dass eine größere Querabmessung (71; 710) desselben im Wesentlichen parallel zu dem Boden (21) selbst ist.

2. Behälter nach Anspruch 1, wobei der Endabschnitt (121; 1210) des inneren Hohlraums (12) wenigstens teilweise eine im Wesentlichen kegelstumpf- oder pyramidenstumpfförmige Ausbildung hat.

3. Behälter (1) nach Anspruch 1 oder 2, wobei der Endteil (121) des inneren Hohlraums (12) und die Einlassöffnung (7) des Dosiergefäßes (3) einen Querschnitt von im Wesentlichen elliptischer Form haben.

4. Behälter (1) nach Anspruch 1 oder 2, wobei der Endteil (121) des inneren Hohlraums (12) und die Einlassöffnung (7) des Dosiergefäßes (3) einen Querschnitt von im Wesentlichen ovaler Form haben.

5. Behälter (1) nach Anspruch 1 oder 2, wobei der Endteil (1210) des inneren Hohlraums (12) und der Einlassöffnung (70) des Dosiergefäßes (3) einen Querschnitt von im Wesentlichen Halbellipsen- oder Halbmondform haben.

6. Behälter (1) nach einem der vorhergehenden Ansprüche, wobei sich der Endteil (121) des inneren Hohlraums (12) im Wesentlichen parallel zu dem Boden (21) des Behälters selbst erstreckt.

7. Behälter (1) nach einem der Ansprüche 1 bis 5, wobei der Endteil (1210) des inneren Hohlraums (12) nach unten hin so ausgebildet ist, dass er gegen den Boden (21) des Behälters selbst im Wesentlichen geneigt ist.

8. Behälter (1) nach einem der vorhergehenden Ansprüche, wobei sich der Kanal (4) längs einer Seite (24, 34) des Behälters selbst erstreckt.

9. Behälter (1) nach einem der vorhergehenden Ansprüche, wobei das Dosiergefäß (3) oberhalb der Hauptflasche (2) angeordnet ist.

10. Behälter (1) nach einem der vorhergehenden Ansprüche, wobei das Dosiergefäß (3) im Wesentlichen längs ausgerichtet mit der Hauptflasche (2) angeordnet ist.

11. Behälter (1) nach einem der vorhergehenden Ansprüche, wobei die Einlassöffnung (7; 70) des Dosiergefäßes (3) in einer Wand (34) des Dosiergefäßes (3) angeordnet ist, die so geneigt ist, dass die Einlassöffnung (7; 70) dem Boden (21) des Behälters selbst zugewandt ist.

12. Behälter (1) nach einem der vorhergehenden Ansprüche, wobei die Einlassöffnung (7; 70) des Dosiergefäßes (3) in einem oberen Teil desselben angeordnet ist.

13. Behälter (1) nach einem der vorhergehenden Ansprüche, wobei das Dosiergefäß (3) ein Ablenkteil (11; 1212) aufweist, das dafür ausgebildet ist, einen Produktstrom, der aus dem Kanal (4) kommt, zu dem Boden des Dosiergefäßes (3) hin abzulenken.

14. Behälter (1) nach dem vorhergehenden Anspruch, wobei das Ablenkteil (11; 1212) an der Einlassöffnung (7; 70) des Dosiergefäßes (3) angeordnet ist.

15. Behälter (1) nach dem vorhergehenden Anspruch, wobei das Ablenkteil (11; 1212) über der Einlassöffnung (7; 70) des Dosiergefäßes (3) angeordnet ist.

16. Behälter (1) nach einem der Ansprüche 13 bis 15, wobei das Ablenkteil (11; 1212) dafür ausgebildet ist, als ein Spritzschutz zu dienen.

17. Behälter (1) nach einem der Ansprüche 13 bis 16, wobei das Ablenkteil (11; 1212) eine Klappe umfasst, die sich in das Innere des Dosiergefäßes (3) erstreckt.

18. Behälter (1) nach einem der Ansprüche 13 bis 17, wobei das Ablenkteil ein Teil (1212) umfasst, das sich an dem oberen Mundstück der Einlassöffnung (70) erstreckt.

19. Behälter (1) nach dem vorhergehenden Anspruch, wobei das Teil (1212), das sich an dem oberen Mundstück der Einlassöffnung (70) erstreckt, als ein Fortsatz einer Wand des Dosiergefäßes (3) ausgebildet ist.

20. Behälter (1) nach einem der vorhergehenden Ansprüche, wobei die Öffnung (8) des Dosiergefäßes (3) an einer oberen Wand des Dosiergefäßes (3) selbst angeordnet ist.

21. Behälter (1) nach einem der vorhergehenden Ansprüche, wobei die Auslassöffnung (6) der Hauptflasche (2) an dem Boden (21) der Hauptflasche selbst angeordnet ist.

22. Behälter (1) nach einem der vorhergehenden Ansprüche, wobei die Auslassöffnung (6) der Hauptflasche (2) eine im Wesentlichen langgestreckte Form hat.

23. Behälter (1) nach dem vorhergehenden Anspruch, wobei die Auslassöffnung (6) der Hauptflasche (2) mit ihrer größeren Querabmessung (61) im Wesentlichen parallel zu dem Boden (21) der Hauptflasche (2) selbst angeordnet ist.

24. Behälter (1) nach Anspruch 22 oder 23, wobei die Auslassöffnung (6) im Wesentlichen elliptisch ist.

25. Behälter (1) nach Anspruch 22 oder 23, wobei die Auslassöffnung (6) im Wesentlichen oval ist.

26. Behälter (1) nach einem der vorhergehenden Ansprüche, wobei der Behälter selbst einen Greifsitz (5) hat, welcher in der Hauptflasche (2) ausgebildet ist.

## Revendications

1. Récipient de distribution (1) comprenant :
- une bouteille principale (2), apte à recevoir le produit fluide à distribuer et comportant un orifice de sortie (6) pour le produit fluide lui-même ;
- un réceptacle mesureur (3) comportant un orifice (7 ; 70) pour l'entrée du produit fluide, lequel orifice d'entrée (7 ; 70) est situé dans une paroi latérale de celui-ci, et une ouverture (8) pour distribuer vers l'extérieur le produit fluide ; et
- un conduit (4) comportant une lumière interne (12) reliant ledit orifice de sortie (6) de ladite bouteille principale (2) audit orifice d'entrée (7 ; 70) dudit réceptacle mesureur (3),
dans lequel ladite bouteille principale (2) est du type apte à être déformé pour provoquer l'introduction du produit fluide dans le réceptacle mesureur (3) à travers ledit conduit (4), **caractérisé :**
**en ce que** ladite lumière interne (12) du conduit (4) comprend, au niveau dudit orifice d'entrée (7 ; 70) dudit réceptacle mesureur (3), une partie d'extrémité (121 ; 1210) dont la section augmente vers ledit orifice d'entrée (7 ; 70),
**en ce que** ladite partie d'extrémité (121 ; 1210) de la lumière interne (12) et ledit orifice d'entrée (7 ; 70) dudit réceptacle mesureur (3) présentent une section transversale de forme substantiellement allongée et sont agencés de telle manière qu'une grande dimension transversale (71 ; 710) de ceux-ci est substantiellement parallèle au fond (21) du récipient lui-même.

2. Récipient (1) selon la revendication 1, dans lequel ladite partie d'extrémité (121 ; 1210) de la lumière interne (12) a au moins partiellement un développement en forme de tronc de cône ou de tronc de pyramide.

3. Récipient (1) selon la revendication 1 ou 2, dans lequel ladite partie d'extrémité (121) de la lumière interne (12) et ledit orifice d'entrée (7) dudit réceptacle mesureur (3) présentent une section transversale de forme substantiellement elliptique.

4. Récipient (1) selon la revendication 1 ou 2, dans lequel ladite partie d'extrémité (121) de la lumière interne (12) et ledit orifice d'entrée (7) dudit réceptacle mesureur (3) présentent une section transversale de forme substantiellement ovale.

5. Récipient (1) selon la revendication 1 ou 2, dans lequel ladite partie d'extrémité (1210) de la lumière interne (12) et ledit orifice d'entrée (70) dudit réceptacle mesureur (3) présentent une section transversale de forme substantiellement en demi-ellipse ou en demi-lune.

6. Récipient (1) selon l'une quelconque des revendications précédentes, dans lequel ladite partie d'extrémité (121) de la lumière interne (12) s'étend substantiellement parallèlement au fond (21) du récipient lui-même.

7. Récipient (1) selon l'une quelconque des revendications 1 à 5, dans lequel ladite partie d'extrémité (1210) de la lumière interne (12) a un développement descendant substantiellement incliné vers le fond (21) du récipient lui-même.

8. Récipient (1) selon l'une quelconque des revendications précédentes, dans lequel ledit conduit (4) s'étend le long d'un côté (24, 34) du récipient lui-même.

9. Récipient (1) selon l'une quelconque des revendications précédentes, dans lequel ledit réceptacle mesureur (3) est situé au-dessus de ladite bouteille principale (2).

10. Récipient (1) selon l'une quelconque des revendications précédentes, dans lequel ledit réceptacle mesureur (3) est situé dans une position alignée substantiellement longitudinalement avec ladite bouteille principale (2).

11. Récipient (1) selon l'une quelconque des revendications précédentes, dans lequel ledit orifice d'entrée (7 ; 70) dudit réceptacle mesureur (3) se situe dans une paroi (34) dudit réceptacle mesureur (3) présentant une inclinaison telle que ledit orifice d'entrée (7 ; 70) ait face au fond (21) du récipient lui-même.

12. Récipient (1) selon l'une quelconque des revendications précédentes, dans lequel ledit orifice d'entrée (7 ; 70) dudit réceptacle mesureur (3) se situe dans une partie supérieure de celui-ci.

13. Récipient (1) selon l'une quelconque des revendications précédentes, dans lequel ledit réceptacle mesureur (3) comprend un élément de déviation (11 ; 1212) apte à dévier l'écoulement de produit provenant dudit conduit (4) vers le fond dudit réceptacle mesureur (3).

14. Récipient (1) selon la précédente revendication, dans lequel ledit élément de déviation (11 ; 1212) se situe au niveau dudit orifice d'entrée (7 ; 70) dudit réceptacle mesureur (3).

15. Récipient (1) selon la précédente revendication, dans lequel ledit élément de déviation (11 ; 1212) se situe au-dessus dudit orifice d'entrée (7 ; 70) dudit réceptacle mesureur (3).

16. Récipient (1) selon l'une quelconque des revendications 13 à 15, dans lequel ledit élément de déviation (11 ; 1212) est apte à servir de dispositif anti projection.

17. Récipient (1) selon l'une quelconque des revendications 13 à 16, dans lequel ledit élément de déviation (11 ; 1212) comprend une bavette s'étendant à l'intérieur dudit réceptacle mesureur (3).

18. Récipient (1) selon l'une quelconque des revendications 13 à 17, dans lequel ledit élément de déviation comprend un élément (1212) s'étendant au niveau de l'embouchure supérieure dudit orifice d'entrée (70).

19. Récipient (1) selon la précédente revendication, dans lequel ledit élément (1212) s'étendant au niveau de l'embouchure supérieure dudit orifice d'entrée (70) est obtenu sous la forme d'un appendice d'une paroi dudit réceptacle mesureur (3).

20. Récipient (1) selon l'une quelconque des revendications précédentes, dans lequel ladite ouverture (8) du réceptacle mesureur (3) se trouve dans une paroi supérieure du réceptacle mesureur (3) lui-même.

21. Récipient (1) selon l'une quelconque des revendications précédentes, dans lequel ledit orifice de sortie (6) de la bouteille principale (2) se situe dans le fond (21) de la bouteille principale elle-même.

22. Récipient (1) selon l'une quelconque des revendications précédentes, dans lequel ledit orifice de sortie (6) de la bouteille principale (2) est de forme substantiellement allongée.

23. Récipient (1) selon la précédente revendication, dans lequel ledit orifice de sortie (6) de la bouteille principale (2) est positionné avec une grande dimension transversale (61) de celui-ci substantiellement parallèle au fond (21) de la bouteille principale (2) elle-même.

24. Récipient (1) selon la revendication 22 ou 23, dans lequel ledit orifice de sortie (6) est substantiellement elliptique.

25. Récipient (1) selon la revendication 22 ou 23, dans lequel ledit orifice de sortie (6) est substantiellement ovale.

26. Récipient (1) selon l'une quelconque des revendications précédentes, comportant une surface de prise (5) du récipient lui-même obtenue dans la bouteille principale (2).
